# EUROPÄISCHE PATENTANMELDUNG

(11) **EP 3 951 491 A1**
(43) Veröffentlichungstag der Anmeldung: **09.02.2022**
(21) Anmeldenummer: 21189123.9
(22) Anmeldetag: 02.08.2021
(51) Int. Cl.: G03B 15/06, G03B 15/03, G03B 11/00, G02B 27/28, G06K 9/00, H04N 5/225

(54) **BILDAUFNAHMESYSTEM ZUR AUFNAHME EINES BILDES EINER PERSON FÜR DIE PERSONENERKENNUNG IN EINER STÖRLICHTUMGEBUNG**

(30) Priorität: 05.08.2020 DE 102020120631
(71) Anmelder: Bundesdruckerei GmbH, 10969 Berlin (DE)
(72) Erfinder: WOLF, Andreas, 13158 Berlin (DE)
(74) Vertreter: Patentship Patentanwaltsgesellschaft mbH

(57) **Zusammenfassung**

Die vorliegende Offenbarung betrifft ein Bildaufnahmesystem (100, 200) zur Aufnahme eines Bildes einer Person (101) für die Personenerkennung in einer Umgebung mit Störlicht (102), mit: einer Beleuchtungseinrichtung (103), welche ausgebildet ist, polarisiertes Beleuchtungslicht (104) in einer vorbestimmten Lichtpolarisationsebene (301) auszusenden; einer Bildaufnahmeeinrichtung (105), welche ausgebildet ist, Licht (106) in der vorbestimmten Lichtpolarisationsebene (301) zu empfangen, um eine Bildaufnahme der Person (101) zu erhalten; und einem Polarisationsfilterelement (107), das von der Beleuchtungseinrichtung (103) und von der Bildaufnahmeeinrichtung (105) beabstandet angeordnet und vorgesehen ist, das Störlicht (102) in der vorbestimmten Polarisationsebene (301) zu unterdrücken.

## Beschreibung

Die vorliegende Offenbarung betrifft das Gebiet der Personenerkennung, insbesondere Gesichtserkennung. Die Offenbarung betrifft ein System und ein Verfahren zur Aufnahme eines Bildes einer Person für die Personenerkennung in einer Umgebung mit Störlicht.

Bekannte Verfahren in der Gesichtserkennung nutzen spezielle Beleuchtung und spezielle Filterung des Lichts, um Presentation Attacks, d.h. Vortäuschen einer falschen Person, bei Gesichtserkennungs-Anwendungen zu erkennen. Dabei wird vorzugsweise kohärentes Licht verwendet. Es wird vorausgesetzt, dass man das Umgebungslicht kontrollieren kann. Dies ist möglich, wenn sich die technische Installation beispielsweise in einem fensterlosen Raum oder im Keller befindet. Eine typische Anwendung von Gesichtserkennung ist die Automatisierte Grenzkontrolle. Moderne Flughäfen bieten eher eine lichtdurchflutete Glas-Architektur. Unabhängig von der speziellen Beleuchtung ist Gesichtserkennung immer fehleranfällig bei Einstrahlung von Umgebungslicht. Es besteht ein Bedarf, in der Personenerkennung Bedingungen zu schaffen, die eine homogene Beleuchtung des Gesichtes sicherstellen, aber auch modernen Ansprüchen an Beleuchtungen genügen, also insbesondere die Sonne nicht völlig aussperren.

Die Leistungsfähigkeit eines Systems, welches zur Authentifizierung von Personen Gesichtserkennung verwendet, hängt neben vielen anderen Dingen davon ab, dass man das Gesicht der zu erkennenden Person ausreichend stark und homogen beleuchtet. Das macht man in der Regel, indem man möglichst großflächige Beleuchtungsmittel installiert und störendes Umgebungslicht möglichst ausschaltet. In Räumen kann man versuchen, heller als das Streulicht der Umgebung zu sein. Kommt die Sonne jedoch ins Spiel, ist diese so gut wie immer heller. Das versucht man zu kompensieren, indem man die Systeme so konstruiert, dass es kein störendes Umgebungslicht gibt, etwa in Räumen oder Bereichen ohne Fenster. Dieses Prinzip passt aber nicht zu moderner und heller Architektur, die den Menschen in den Mittelpunkt stellt. An manchen Flughäfen können deshalb morgens und nachmittags jeweils andere biometrische Grenzkontrollsysteme nicht benutzt werden.

Es ist daher eine Aufgabe der vorliegenden Offenbarung, ein effizientes Konzept zur Personenerkennung zu schaffen. Insbesondere ist es eine Aufgabe, ein effizientes Konzept zur Personenerkennung zu schaffen, bei der die Umgebungsbeleuchtung so kontrolliert bzw. beeinflusst wird, dass eine homogene Beleuchtung des Gesichtes eines biometrischen Subjektes in einem Gesichtserkennungssystem gefördert oder zumindest nicht behindert wird. Außerdem soll diese Lösung so gestaltet sein, dass sie in "offen wirkenden" Umgebungen verwendet werden kann, also insbesondere keine undurchsichtigen Barrieren um das biometrische Subjekt bzw. die Person platziert werden müssen.

Die zu lösende Aufgabe besteht also darin, trotz lichtdurchfluteter Umgebung eine homogene Beleuchtung zu erzielen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Offenbarung basiert auf der Erkenntnis, dass mittels polarisierten Lichts für den Menschen unsichtbar dafür gesorgt werden kann, dass störendes Umgebungslicht keinen negativen Einfluss auf Gesichtserkennungssysteme nehmen kann, ohne das Umfeld durch undurchsichtige Wände einzuengen.

Während die Beleuchtung des Personenerkennungssystems bzw. GesichtserkennungsSystems nicht beliebig verstärkt werden kann, will man die Benutzer nicht blenden, kann aber sichergestellt werden, dass nicht das gesamte Licht überhaupt relevant ist, indem nur Licht in einer Polarisationsebene (in dieser Offenbarung auch als Lichtpolarisationsebene bezeichnet) benutzt wird. Der Mensch kann das nicht erkennen, für ihn ist jedes Licht gleich.

Wird also dafür gesorgt, dass in der Umgebung des biometrischen Systems eine bestimmte Polarisationsebene aus dem Umgebungslicht ausgefiltert wird, so ist diese Ebene für das "Nutzlicht" frei. Die Beleuchtung des Systems kann dann so modifiziert werden, dass sie nur Licht in einer Polarisationsebene emittiert, etwa mit einem Polfilter. Empfängt auch die erfassende Kamera nur Licht in dieser Polarisationsebene, etwa wiederum durch Verwendung eines Polfilters, so ist das resultierende System immun gegen einfallendes Störlicht.

Die Entfernung der betreffenden "Nutz-Ebene" aus dem Umgebungslicht kann beispielsweise dadurch geschehen, dass in der Nähe des biometrischen Systems transparente, aber mit Polfiltern versehene Trennwände installiert werden oder gleich alle Fenster entsprechend ausgestattet werden. Die Innenbeleuchtung kann meist passend gestaltet werden.

In einer Ausgestaltung des Systems können variable Polfilter verwendet werden, deren Schwingungsebene passend eingestellt werden kann. In diesem Fall kann die für einen bestimmten Zeitpunkt jeweils am besten passende, d.h. im Umgebungslicht minimal vorkommende Polarisationsebene bestimmt werden und dann als Nutzebene verwendet werden.

Eine homogene Beleuchtung des Gesichtes eines zu erfassenden biometrischen Subjektes wie in dieser Offenbarung vorgestellt, ist nicht nur für die Presentation Attack Erkennung hilfreich, sondern kann generell die Gesichtserkennung bei nahezu jeder Anwendung vereinfachen und durch Verringerung des Anteils von Erkennungsfehlern leistungsfähiger machen.

Die in dieser Offenbarung beschriebene Idee kann beispielsweise in Personenerkennungseinrichtungen, wie z.B. ABC ("Automated Border Control")-Gates, d.h. automatischer Grenzkontrolle, angewendet werden, wie im Folgenden beschrieben. In einer Box von ABC-Gates, wie z.B. dem System "EasyPASS" der Bundespolizei zur Grenzkontrolle an Flughäfen, die sich ja bereits durch gläserne Wände und Türen auszeichnen, können die transparenten Seitenwände nach oben verlängert werden, z.B. auf deutlich über Mannshöhe. Optional können über den Gates gläserne Decken eingezogen werden. Alle transparenten Flächen werden mit Polfiltern versehen, die möglichst "schwach" arbeiten, also nicht nur genau eine Schwingungsebene durchlassen, sondern auch Wellen in kleineren Winkeln dazu. Die Aufgabe dieser Filter besteht nicht darin, nur Licht einer Schwingungsebene durchzulassen, sondern Licht einer definierten Schwingungsrichtung gerade nicht durchzulassen. Diese Ebene definiert die Ebene des Nutzlichtes. Vor Beleuchtung und Kamera des Gesichtserkennungssystems, beispielsweise bei EasyPASS in der Ausgangstür, werden Polfilter angebracht, die wiederum möglichst genau die durch die Polfilter der Glasflächen ausgefilterte Ebene durchlassen. Auf diese Weise kann das für die Gesichtserkennung verwendete Licht unabhängig von der Umgebung kontrolliert werden. Transmissionsverluste durch die Filter vor Kamera und Lichtquelle können durch eine intensivere Beleuchtung ausgeglichen werden.

Gemäß einem ersten Aspekt betrifft die Offenbarung ein Bildaufnahmesystem zur Aufnahme eines Bildes einer Person für die Personenerkennung in einer Umgebung mit Störlicht, mit: einer Beleuchtungseinrichtung, welche ausgebildet ist, polarisiertes Beleuchtungslicht in einer vorbestimmten Lichtpolarisationsebene auszusenden; einer Bildaufnahmeeinrichtung, welche ausgebildet ist, Licht in der vorbestimmten Lichtpolarisationsebene zu empfangen, um eine Bildaufnahme der Person zu erhalten; und einem Polarisationsfilterelement, das von der Beleuchtungseinrichtung und von der Bildaufnahmeeinrichtung beabstandet angeordnet und vorgesehen ist, das Störlicht in der vorbestimmten Polarisationsebene zu unterdrücken.

Mit einem solchen Bildaufnahmesystem kann die Personenerkennung effizient durchgeführt werden. Über das Polarisationsfilterelement kann die Umgebungsbeleuchtung so kontrolliert bzw. beeinflusst werden, dass eine homogene Beleuchtung des Gesichtes der Person sichergestellt werden kann. Das Bildaufnahmesystem kann zudem in "offen wirkenden" Umgebungen verwendet werden. Es müssen also insbesondere keine undurchsichtigen Barrieren um die Person platziert werden und das Bildaufnahmesystem braucht auch nicht im Keller aufgestellt werden. Ferner wird das Bildaufnahmesystem nicht durch störendes und wechselndes Umgebungslicht in seiner Leistungsfähigkeit beeinträchtigt.

Gemäß einer Ausführungsform umfasst die Beleuchtungseinrichtung ein Polarisations-Sendefilter, das ausgebildet ist, nur polarisiertes Beleuchtungslicht in der vorbestimmten Lichtpolarisationsebene durchzulassen. Damit wird erreicht, dass das Nutzlicht in der vorbestimmten Lichtpolarisationsebene polarisiert ist, d.h. in der Ebene, in der aufgrund der Sperrung durch das Polarisationsfilterelement kein Störlicht bzw. Umgebungslicht auf die Person einstrahlt.

Gemäß einer Ausführungsform umfasst die Bildaufnahmeeinrichtung ein Polarisations-Empfangsfilter, das ausgebildet ist, nur polarisiertes Beleuchtungslicht in der vorbestimmten Lichtpolarisationsebene durchzulassen. Damit wird erreicht, dass das empfangene Licht in der vorbestimmten Lichtpolarisationsebene polarisiert ist, d.h. in der Ebene, in der aufgrund der Sperrung durch das Polarisationsfilterelement kein Störlicht bzw. Umgebungslicht auf die Person einstrahlt. Das Polarisations-Empfangsfilter blendet damit alle störenden Effekte aus der Bildaufnahme aus.

Gemäß einer Ausführungsform ist das Polarisationsfilterelement ausgebildet, das Störlicht in einer zweiten Polarisationsebene durchzulassen, welche orthogonal zu der vorbestimmten Polarisationsebene ist. Damit wird erreicht, dass das Polarisationsfilterelement zu keiner völligen Lichtabschirmung führt, so dass die Person noch ausreichend beleuchtet ist und nicht in einer Dunkelkammer sitzt, bei der das Licht der Beleuchtungseinrichtung als blendend empfunden wird.

Gemäß einer Ausführungsform ist das Polarisationsfilterelement ausgebildet, das Störlicht ferner in weiteren Polarisationsebenen durchzulassen, deren Winkel zu der vorbestimmten Polarisationsebene oberhalb eines Schwellwerts liegen. Damit wird erreicht, dass das Polarisationsfilterelement den größten Anteil des Störlichts durchlässt, so dass die Person sich in einer lichtdurchfluteten Umgebung befindet, in der nur ein kleiner Teil des Lichts ausgeblendet wird, welcher der vorbestimmten Lichtpolarisationsebene entspricht. Beispielsweise können nur Polarisationsebenen gesperrt werden, die in einem engen Winkelbereich zu der vorbestimmten Lichtpolarisationsebene stehen, z.B. im Bereich von etwa +/- 30 Grad oder +/- 20 Grad oder +/- 10 Grad. So wird der überwiegende Anteil des Störlichts durchgelassen, während nur Störlicht gesperrt wird, dessen Lichtpolarisationsebene sich in einem kleinen Winkelbereich um die vorbestimmte Lichtpolarisationsebene befindet.

Gemäß einer Ausführungsform ist das Polarisationsfilterelement als Flächenelement ausgebildet. Damit wird erreicht, dass das Polarisationsfilterelement sich leicht auf große Flächen aufbringen lässt, beispielsweise Glasfenster, Glastüren oder Glasabsperrungen oder Glaswänden oder Glasdecken, etc. von ABC-Gates oder EasyPASS Durchgangskontrollsystemen wie oben beschrieben. Es versteht sich, dass diese Flächen nicht notwendigerweise aus Glas sein müssen, sie können auch aus einem transparenten Kunststoff oder Plexiglas oder einem anderen lichtdurchlässigen Stoff bestehen.

Gemäß einer Ausführungsform ist das Polarisationsfilterelement auf einer transparenten Trennwand oder Türe oder einer transparenten Abschirmung oder einem Fenster aufgebracht, welches zwischen dem Störlicht und der Person angeordnet ist. Damit wird erreicht, dass das Polarisationsfilterelement effizient die Anteile des einfallenden Störlichts der Umgebung, z.B. der Sonne, abschirmen kann, welche in der vorbestimmten Lichtpolarisationsebene polarisiert sind. Somit kann das System auch in lichtdurchfluteten Umgebungen eingesetzt werden, ohne an Leistungsfähigkeit einzubüßen.

Gemäß einer Ausführungsform ist das Polarisationsfilterelement auf einer Innenraumbeleuchtung aufgebracht. Damit wird erreicht, dass das Bildaufnahmesystem bzw. die Person, die aufgenommen werden soll, nicht im Dunkeln sitzen muss, sondern durch die Innenraumbeleuchtung ausreichend Licht zur Verfügung gestellt bekommt. Bei einer solchen Filterung der Innenraumbeleuchtung fällt kein störendes Licht durch die Innenraumbeleuchtung auf die Bildaufnahmeeinrichtung, so dass eine qualitativ hochwertige Bilderfassung sichergestellt werden kann.

Gemäß einer Ausführungsform ist das Polarisationsfilterelement als eine Flüssigkristall-Gitterstruktur ausgebildet. Damit wird erreicht, dass das Polarisationsfilterelement als eine dünne Schicht aufgebracht werden kann, z.B. auf Fenster und Türen oder transparente Absperrungen. An die Flüssigkristall-Gitterstruktur kann eine Spannung angelegt werden, mit der der Grad der Lichtdurchlässigkeit durch die Gitterstruktur eingestellt werden kann. Somit kann die Unterdrückung des Störlichts durch die Gitterstruktur effizient geregelt werden.

Gemäß einer Ausführungsform umfasst das Bildaufnahmesystem einen Prozessor, welcher ausgebildet ist, die Bildaufnahme mit einer Referenzaufnahme zu vergleichen, um die Person zu erkennen. Damit wird erreicht, dass effizient eine Personenerkennung durchgeführt werden kann. Der Prozessor kann beispielsweise in der Bildaufnahmeeinrichtung, beispielsweise einer Kamera, integriert sein und Zugriff auf die Bildaufnahme der Person haben. Die Referenzaufnahme kann in einem Speicher der Bildaufnahmeeinrichtung hinterlegt sein, auf die der Prozessor Zugriff hat. Alternativ kann der Prozessor die Referenzaufnahme aus einem Ausweisdokument der zu erkennenden Person auslesen. Dabei kann es sich um ein biometrisches Foto der Person handeln, welche in elektronisch lesbarem Format in dem Ausweisdokument, z.B. auf einem Chip im Ausweisdokument, gespeichert ist. Das biometrische Foto der Person kann kryptografisch verschlüsselt in dem Ausweisdokument gespeichert sein, wobei dem Prozessor ein Schlüssel bekannt ist, mit dem das biometrische Foto entschlüsselt werden kann.

Gemäß einer Ausführungsform basiert die Referenzaufnahme auf einer Aufnahme mit Licht in der vorbestimmten Lichtpolarisationsebene. Damit wird erreicht, dass ein feinerer Abgleich zwischen aufgenommenem Bild und Referenzaufnahme erzielt werden kann. Denn bei einem Vergleich der beiden Bilder werden nur die Merkmale berücksichtigt, welche auf der gleichen vorbestimmten Lichtpolarisationsebene beruhen.

Gemäß einer Ausführungsform ist der Prozessor ausgebildet, die Beleuchtungseinrichtung und/oder das Polarisationsfilterelement basierend auf einer Erfassung des Störlichts einzustellen. Damit wird erreicht, dass die Beleuchtungseinrichtung und das Polarisationsfilterelement optimal an das einfallende Störlicht angepasst werden können, um so die Genauigkeit der Personenerkennung zu erhöhen.

Gemäß einer Ausführungsform ist der Prozessor ausgebildet, die vorbestimmte Polarisationsebene so einzustellen, dass sie einer in dem Störlicht mit minimaler Häufigkeit auftretenden Polarisationsebene entspricht. Damit wird erreicht, dass die Aufnahme mit Nutzlicht derjenigen Polarisierungsebene erfolgt, die mit der geringsten Häufigkeit in dem Störlicht auftritt, so dass der Abstand zwischen Störlicht und Nutzlicht möglichst groß wird und eine hohe Genauigkeit der Personenerkennung erzielt werden kann.

Gemäß einer Ausführungsform ist der Prozessor ausgebildet ist, eine Abschwächung des Beleuchtungslichts aufgrund der Polarisation des Beleuchtungslichts mittels einer entsprechenden Verstärkung in der Beleuchtungseinrichtung auszugleichen. Damit wird erreicht, dass das Nutzlicht trotz Polarisation in ausreichender Lichtintensität abgestrahlt wird, so dass es zu einer hoch qualitativen Bildaufnahme durch die Bildaufnahmeeinrichtung kommt, andererseits die aufzunehmende Person aber nicht unnötig geblendet wird.

Gemäß einem zweiten Aspekt betrifft die Offenbarung ein Verfahren zur Aufnahme eines Bildes einer Person für die Personenerkennung in einer Umgebung mit Störlicht, wobei das Verfahren folgendes umfasst: Aussenden von polarisiertem Beleuchtungslicht in einer vorbestimmten Lichtpolarisationsebene durch eine Beleuchtungseinrichtung; Empfangen von Licht in der vorbestimmten Lichtpolarisationsebene durch eine Bildaufnahmeeinrichtung, um eine Bildaufnahme der Person zu erhalten; und Unterdrücken des Störlichts in der vorbestimmten Polarisationsebene durch ein Polarisationsfilterelement, das von der Beleuchtungseinrichtung und von der Bildaufnahmeeinrichtung beabstandet angeordnet ist.

Mit einem solchen Verfahren kann die Personenerkennung effizient durchgeführt werden. Über das Polarisationsfilterelement kann die Umgebungsbeleuchtung so kontrolliert bzw. beeinflusst werden, dass eine homogene Beleuchtung des Gesichtes der Person sichergestellt werden kann. Das Verfahren zur Bildaufnahme kann zudem in "offen wirkenden" Umgebungen verwendet werden. Es müssen also insbesondere keine undurchsichtigen Barrieren um die Person platziert werden und das Verfahren zur Bildaufnahme braucht auch nicht in dunklen Räumen, wie im Keller betrieben werden. Ferner wird das Bildaufnahmeverfahren nicht durch störendes und wechselndes Umgebungslicht in seiner Leistungsfähigkeit beeinträchtigt.

Das Verfahren kann in dem Bildaufnahmesystem gemäß dem oben beschriebenen ersten Aspekt eingesetzt werden. Weitere Merkmale des Verfahrens resultieren unmittelbar aus den Merkmalen und/oder der Funktionalität des Bildaufnahmesystems.

Gemäß einem dritten Aspekt betrifft die Offenbarung ein Computerprogramm mit einem Programmcode zum Durchführen des Verfahrens zur Aufnahme eines Bildes einer Person für die Personenerkennung in einer Umgebung mit Störlicht. Die Beleuchtungseinrichtung und/oder die Bildaufnahmeeinrichtung können jeweils programmtechnisch eingerichtet sein, um den Programmcode auszuführen.

Die hier vorliegende Offenbarung kann in Hardware und in Software implementiert werden.

Weitere Ausführungsformen werden Bezug nehmend auf die beiliegenden Zeichnungen näher erläutert. Es zeigen:
- Fig. 1: ein schematisches Diagramm eines Bildaufnahmesystems 100 zur Aufnahme eines Bildes einer Person für die Personenerkennung in einer Umgebung mit Störlicht gemäß einem Beispiel;
- Fig. 2: ein schematisches Diagramm eines Bildaufnahmesystems 200 zur Aufnahme eines Bildes einer Person für die Personenerkennung in einer Umgebung mit Störlicht gemäß einem Beispiel;
- Fig. 3: ein schematisches Diagramm von Licht 104, das in einer ersten Polarisationsebene 301 polarisiert ist und von Licht 304, das in einer zweiten Polarisationsebene 302 polarisiert ist, gemäß einem Beispiel; und
- Fig. 4: ein schematisches Diagramm eines Verfahrens 400 zur Aufnahme eines Bildes einer Person für die Personenerkennung in einer Umgebung mit Störlicht gemäß einem Beispiel.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

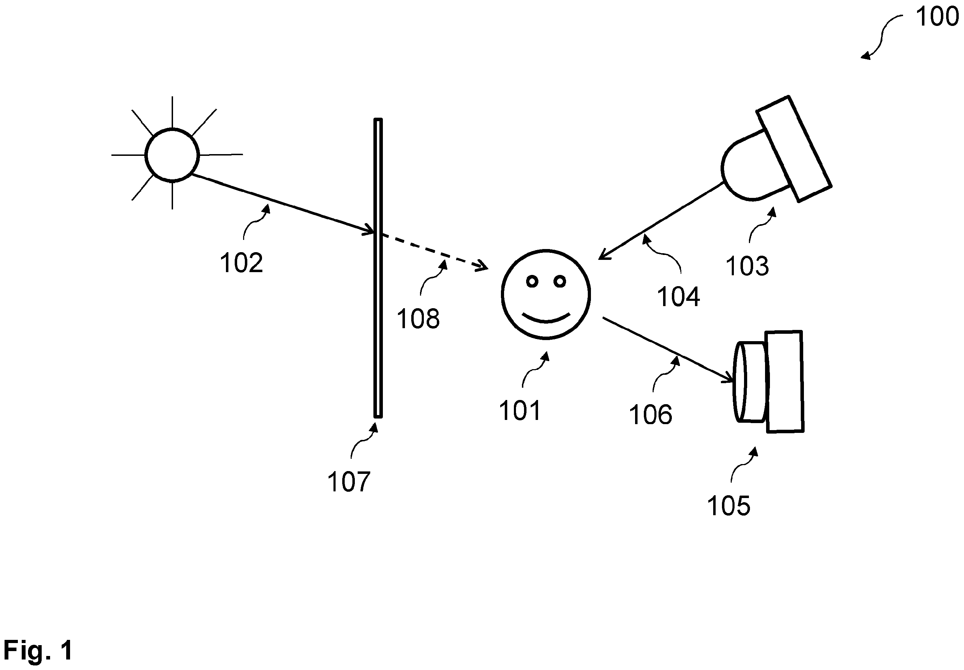

Fig. 1 zeigt ein schematisches Diagramm eines Bildaufnahmesystems 100 zur Aufnahme eines Bildes einer Person 101 für die Personenerkennung in einer Umgebung mit Störlicht 102 gemäß einem Beispiel. Das Bildaufnahmesystem 100 umfasst eine Beleuchtungseinrichtung 103, z.B. einen Blitz, eine Bildaufnahmeeinrichtung 105, z.B. eine Kamera, und ein Polarisationsfilterelement 107.

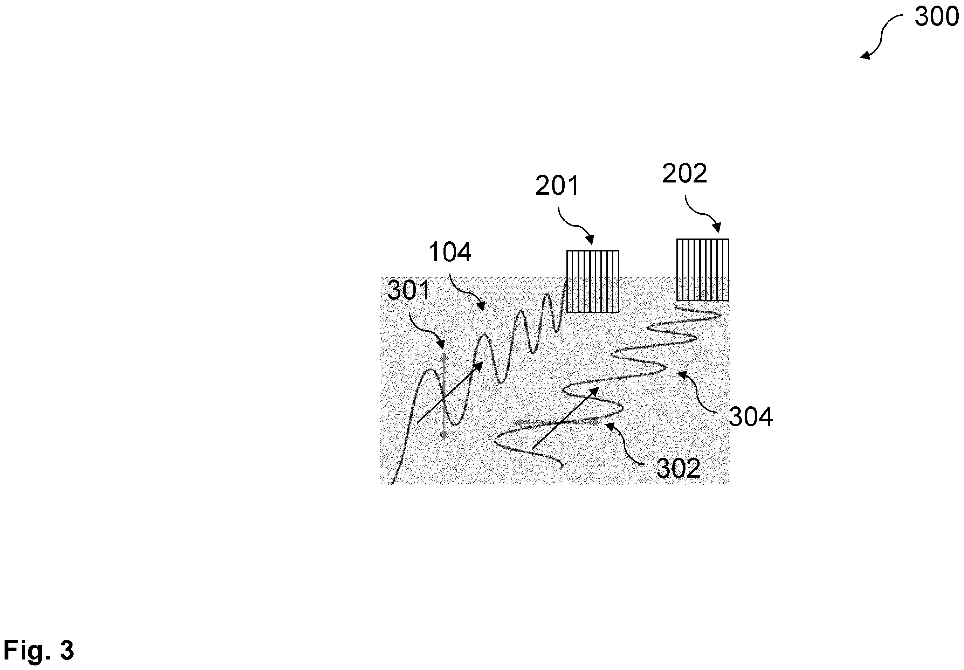

Die Beleuchtungseinrichtung 103 ist ausgebildet, polarisiertes Beleuchtungslicht 104 in einer vorbestimmten Lichtpolarisationsebene, z.B. einer ersten Lichtpolarisationsebene 301 gemäß der Abbildung in Figur 3, auszusenden.

Die Bildaufnahmeeinrichtung 105 ist ausgebildet, Licht 106 in der vorbestimmten Lichtpolarisationsebene 301 zu empfangen, um eine Bildaufnahme der Person 101 zu erhalten.

Das Polarisationsfilterelement 107 ist von der Beleuchtungseinrichtung 103 und von der Bildaufnahmeeinrichtung 105 beabstandet angeordnet und ist vorgesehen, das Störlicht 102 in der vorbestimmten Polarisationsebene 301 zu unterdrücken 108.

Das Polarisationsfilterelement 107 kann ausgebildet sein, das Störlicht 102 in einer zweiten Lichtpolarisationsebene durchzulassen, welche orthogonal zu der vorbestimmten Lichtpolarisationsebene 301 ist, z.B. einer zweiten Lichtpolarisationsebene 302 gemäß der Darstellung in Figur 3.

Das Polarisationsfilterelement 107 kann ausgebildet sein, das Störlicht 102 ferner in weiteren Lichtpolarisationsebenen durchzulassen, deren Winkel zu der vorbestimmten Lichtpolarisationsebene 301 oberhalb eines Schwellwerts liegen. Beispielsweise können alle Lichtpolarisationsebenen durchgelassen werden, die in einem Winkel größer 30 Grad oder kleiner -30 Grad zur vorbestimmten Lichtpolarisationsebene stehen. Lichtpolarisationsebenen, die die in einem Winkel kleiner 30 Grad oder größer -30 Grad zur vorbestimmten Lichtpolarisationsebene stehen, können somit gesperrt 108 werden. Der Winkel +/- 30 Grad dient hier lediglich als beispielhafte Veranschaulichung. Es kann auch jeder andere Winkel gewählt werden, z.B. +/- 20 Grad, +/- 10 Grad, +/- 40 Grad, +/- 15 Grad, etc. Beispielsweise kann dieser Winkel so gewählt werden, dass der größte Anteil des Störlichts zur Raumbeleuchtung durchgelassen wird, während nur Anteile des Störlichts gesperrt werden, die in Lichtpolarisationsebenen polarisiert sind, welche in engem Winkel zur vorgegebenen Lichtpolarisationsebene stehen.

Das Polarisationsfilterelement 107 kann beispielsweise als Flächenelement ausgebildet sein. Damit kann es leicht an transparente Türen, Fenster und Trennwände angebracht werden, um Licht in der vorbestimmten Lichtpolarisationsebene zu unterdrücken 108.

Beispielsweise kann das Polarisationsfilterelement 107 auf einer transparenten Trennwand oder Türe oder einer transparenten Abschirmung oder einem Fenster aufgebracht sein, welches zwischen dem Störlicht 102 und der Person 101 angeordnet ist. Somit wird eine effiziente Abschirmung gegenüber dem Störlicht erzielt.

Ferner kann das Polarisationsfilterelement 107 auf einer Innenraumbeleuchtung aufgebracht sein. Damit kann das Bildaufnahmesystem in Räumen untergebracht sein, die nicht über eine ausreichende Umgebungsbeleuchtung verfügen. Auch hier kommt es durch das Polarisationsfilterelement 107 zu keinen störenden Einflüssen durch die Innenraumbeleuchtung.

Das Polarisationsfilterelement 107 kann beispielsweise als eine Flüssigkristall-Gitterstruktur ausgebildet sein, wie im Folgenden beschrieben.

Flüssigkristalle sind fast transparente Stoffe, die Eigenschaften von Flüssigkeiten aber auch Eigenschaften von fester Materie aufweisen. Besonders wichtig ist die Eigenschaft, dass sie die Polarisationsrichtung von Licht, welches durch sie hindurchgeht, verändern können.

Eine Flüssigkristall-Gitterstruktur für ein Polarisationsfilterelement 107 besteht beispielsweise zunächst aus zwei um 90° zueinander verdrehten linearen Polarisationsfiltern. Zwischen den Filtern befinden sich zwei durchsichtige Elektroden bzw. Glasplatten mit sehr dünner Metallbeschichtung. Zwischen den beiden Elektroden befinden sich die länglichen Flüssigkristalle. Die Flüssigkristalle ordnen sich hier entlang der beiden Orientierungsschichten an, die auf die Elektroden aufgebracht sind. Diese Orientierungsschichten sind wie die Polfilter um 90° zueinander verdreht. Daher ordnen sich die Flüssigkristalle auch verdreht an.

Fällt nun unpolarisiertes Licht der Hintergrundbeleuchtung auf das erste Polfilter, so wird das Licht linear polarisiert. Anschließend passiert es die durchsichtige Elektrode und trifft auf die Flüssigkristalle. Diese sorgen durch ihre verdrehte Anordnung dafür, dass auch die Polarisationsebene des sie passierenden Lichtes um 90° gedreht wird, da die Polarisationsebene der Ausrichtung der Moleküle folgt. Somit kann das Licht nun auch den zweiten Polfilter passieren, da seine Polarisationsebene gerade der Durchlassrichtung dieses Filters entspricht. In diesem Zustand ist die Zelle lichtdurchlässig.

Leg man jedoch an die beiden Elektroden eine Spannung an, so entsteht zwischen den beiden Elektroden ein elektrisches Feld. Dieses Feld sorgt dafür, dass sich die Flüssigkristalle nicht mehr entlang der Orientierungsschicht anordnen, sondern entlang der elektrischen Feldlinien. Trifft nun linear polarisiertes Licht auf die Flüssigkristalle, so wird die Polarisationsebene des Lichtes nicht verdreht. Das Licht passiert die Flüssigkristalle unverändert, trifft auf das zweite Polfilter und wird von diesem absorbiert. Die Zelle lässt also bei angelegter Spannung kein Licht durch.

Zwischen der durchlässigen Zelle bei keiner angelegten Spannung und der komplett lichtundurchlässigen Zelle bei angelegter Spannung kann der Lichtdurchgang quasi stufenlos über die Höhe der angelegten Spannung geregelt werden, je kleiner die Spannung wird, desto mehr Licht kann die Zelle passieren.

Eine solche Flüssigkristall-Gitterstruktur kann so aufgebaut sein, beispielsweise durch entsprechendes Design der beiden Polfilter und Anlegen der entsprechenden Spannung, dass das Störlicht 102 gerade in der vorbestimmten Lichtpolarisationsebene unterdrückt wird, während es in anderen Lichtpolarisationsebenen ungehindert passieren kann.

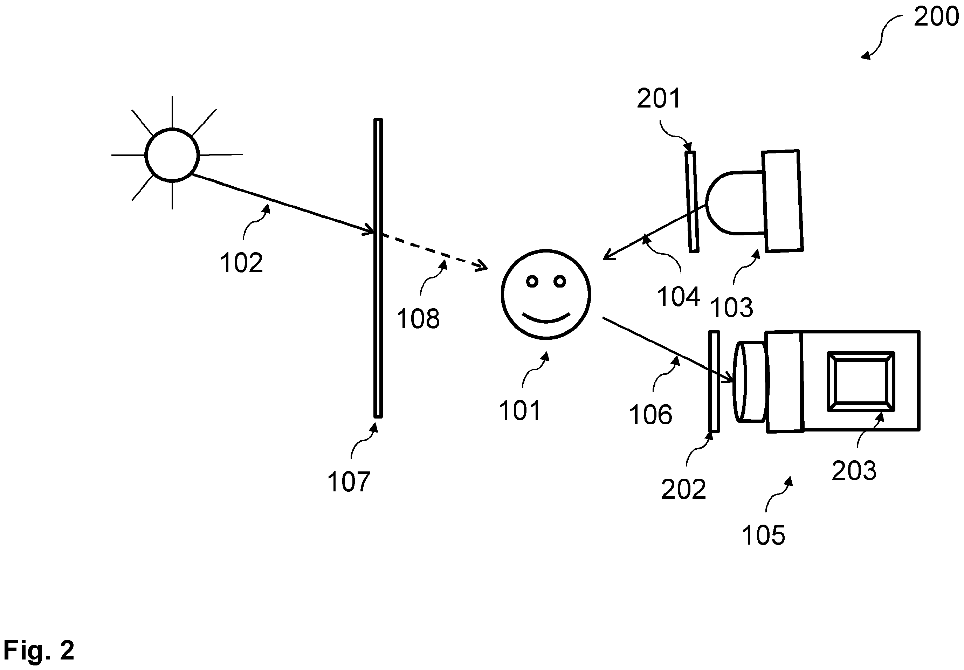

Fig. 2 zeigt ein schematisches Diagramm eines Bildaufnahmesystems 200 zur Aufnahme eines Bildes einer Person 101 für die Personenerkennung in einer Umgebung mit Störlicht 102 gemäß einem Beispiel.

Das Bildaufnahmesystem 200 entspricht dem zu Figur 1 beschriebenen Bildaufnahmesystem 100, umfasst jedoch noch weitere Komponenten, wie im Folgenden näher beschrieben. Das Bildaufnahmesystem 200 umfasst eine Beleuchtungseinrichtung 103, welche ausgebildet ist, polarisiertes Beleuchtungslicht 104 in einer vorbestimmten Lichtpolarisationsebene 301 auszusenden. Das Bildaufnahmesystem 200 umfasst eine Bildaufnahmeeinrichtung 105, welche ausgebildet ist, Licht 106 in der vorbestimmten Lichtpolarisationsebene 301 zu empfangen, um eine Bildaufnahme der Person 101 zu erhalten. Das Bildaufnahmesystem 200 umfasst ferner ein Polarisationsfilterelement 107, das von der Beleuchtungseinrichtung 103 und von der Bildaufnahmeeinrichtung 105 beabstandet angeordnet ist und vorgesehen ist, das Störlicht 102 in der vorbestimmten Polarisationsebene 301 zu unterdrücken 108, wie bereits oben zu Figur 1 beschrieben.

Als zusätzliche Komponente bei dem Bildaufnahmesystem 200 umfasst die Beleuchtungseinrichtung 103 ein Polarisations-Sendefilter 201, das ausgebildet ist, nur polarisiertes Beleuchtungslicht 104 in der vorbestimmten Lichtpolarisationsebene 301 (siehe Darstellung in Fig. 3) durchzulassen. So kann die Beleuchtungseinrichtung 103 beispielsweise Weißlicht erzeugen, das alle Polarisationsebenen des Lichts enthält und die vorgegebene Lichtpolarisationsebene durch das Polarisations-Sendefilter 201 eingestellt wird, d.h. Beleuchtungslicht, welches das Polarisations-Sendefilter 201 passiert, umfasst nur noch polarisiertes Licht der vorgegebenen Lichtpolarisationsebene.

Als zusätzliche Komponente bei dem Bildaufnahmesystem 200 umfasst die Bildaufnahmeeinrichtung 105 ein Polarisations-Empfangsfilter 202, das ausgebildet ist, nur polarisiertes Beleuchtungslicht 104 in der vorbestimmten Lichtpolarisationsebene 301 (siehe Darstellung in Fig. 3) durchzulassen.

Das Polarisationsfilterelement 107 kann ausgebildet sein, das Störlicht 102 in einer zweiten Polarisationsebene 302 (siehe Darstellung in Fig. 3) durchzulassen, welche orthogonal zu der vorbestimmten Polarisationsebene 301 ist.

Das Polarisationsfilterelement 107 kann ferner ausgebildet sein, das Störlicht 102 ferner in weiteren Polarisationsebenen durchzulassen, deren Winkel zu der vorbestimmten Polarisationsebene 301 oberhalb eines Schwellwerts liegen. Zum Beispiel können alle Polarisationsebenen des Störlichts 102 durchgelassen werden, die in Winkeln größer einem Schwellwert zu der vorbestimmten Lichtpolarisationsebene stehen. Beispielsweise kann der Schwellwert 30°, 40°, 35°, 20°, 15°, 10°, 5° oder andere Werte betragen. Bei einem negativen Winkel ist hier zu verstehen, dass der Betrag des Winkels größer als der Schwellwert sein soll.

Das Polarisationsfilterelement 107 kann beispielsweise als Flächenelement ausgebildet sein, das dadurch leicht auf Flächen aufgebracht oder aufgetragen oder abgeschieden werden kann.

Das Polarisationsfilterelement 107 kann beispielsweise auf einer transparenten Trennwand oder Türe oder einer transparenten Abschirmung oder einem Fenster aufgebracht werden, welches zwischen dem Störlicht 102 und der Person 101 angeordnet ist. Natürlich kann das Polarisationsfilterelement 107 auch selbst die transparente Trennwand oder Türe oder die transparente Abschirmung oder das Fenster bilden.

Das Polarisationsfilterelement 107 kann ferner auf einer Innenraumbeleuchtung aufgebracht sein, um damit das von der Innenraumbeleuchtung emittierte Störlicht entsprechend zu polarisieren, wie oben beschrieben.

Ferner kann das Polarisationsfilterelement 107 als eine Flüssigkristall-Gitterstruktur ausgebildet sein, wie oben zu Figur 1 beschrieben.

Als zusätzliche Komponente bei dem Bildaufnahmesystem 200 ist ein Prozessor 203 vorgesehen, welcher ausgebildet ist, die Bildaufnahme mit einer Referenzaufnahme zu vergleichen, um die Person 101 zu erkennen. Der Prozessor 203 kann beispielsweise in der Bildaufnahmeeinrichtung 105 angeordnet oder darin integriert sein. Alternativ kann der Prozessor 203 auch in der Beleuchtungseinrichtung 103 angeordnet sein oder der Prozessor 203 kann eine externe Komponente, z.B. einer Steuerung des Bildaufnahmesystems 200 sein.

Die Referenzaufnahme kann auf einer Aufnahme mit Weißlicht basieren, beispielsweise einem biometrischen Foto der Person 101, insbesondere eines Gesichtsbereichs der Person 101. Alternativ und/oder zusätzlich kann die Referenzaufnahme auf einer Aufnahme mit Licht in der vorbestimmten Lichtpolarisationsebene 301 basieren. Eine solche Aufnahme kann zuvor gemacht worden sein und sich in einem Speicher mit Referenzdaten der Person befinden. Ein solcher Speicher kann sich auf einem Server befinden, auf den der Prozessor 203 Zugriff hat oder auch auf einem Ausweisdokument der Person 101, welches von dem Prozessor 203 eingelesen werden kann.

Der Prozessor 203 kann ausgebildet sein, die Beleuchtungseinrichtung 103 und/oder das Polarisationsfilterelement 107 basierend auf einer Erfassung des Störlichts 102 einzustellen.

So kann die Aufnahmeeinrichtung 105 beispielsweise über eine Kommunikationsschnittstelle zu der Beleuchtungseinrichtung 103 verfügen, z.B. ein WLAN Interface, NFC (Nahfeld-Kommunikations)-Interface oder ein USB-Interface, über welches Steuerbefehle des Prozessors 203 zur Einstellung der Beleuchtungseinrichtung 103 übertragen werden können. Diese Steuerbefehle können die vorgegebene Lichtpolarisationsebene definieren, welche von der Beleuchtungseinrichtung 103 einzustellen ist. Basierend auf diesen Steuerbefehlen kann die Beleuchtungseinrichtung 103 polarisiertes Beleuchtungslicht 104 in der vorbestimmten Lichtpolarisationsebene 301 erzeugen und/oder die Beleuchtungseinrichtung 103 kann das Polarisations-Sendefilter 201 so justieren, dass nur polarisiertes Beleuchtungslicht 104 in der vorbestimmten Lichtpolarisationsebene 301 durchgelassen wird.

Die Aufnahmeeinrichtung 105 kann ferner über eine Kommunikationsschnittstelle zu dem Polarisationsfilterelement 107 verfügen, z.B. ein WLAN Interface, NFC-Interface oder ein USB-Interface, über welches Steuerbefehle des Prozessors 203 zur Einstellung des Polarisationsfilterelements 107 übertragen werden können. Diese Steuerbefehle können die vorgegebene Lichtpolarisationsebene definieren, welche von dem Polarisationsfilterelement 107 einzustellen ist. Basierend auf diesen Steuerbefehlen kann das Polarisationsfilterelement 107 das Störlicht 102 in der vorbestimmten Lichtpolarisationsebene 301 unterdrücken. Die Steuerbefehle können ferner einen Winkelbereich mitteilen, innerhalb dessen Lichtpolarisationsebenen des Störlichts 102 bezüglich der vorbestimmten Lichtpolarisationsebene 301 unterdrückt werden sollen.

Beispielsweise kann über diese Kommunikationsschnittstelle eine Spannung eingestellt werden, welche an ein als Flüssigkristall-Gitterstruktur ausgebildetes Polarisationsfilterelement 107 angelegt werden soll. Mit dieser Spannung kann dann der Bereich angesteuert werden, in dem die Flüssigkristall-Gitterstruktur bzw. das Polarisationsfilterelement 107 polarisiertes Beleuchtungslicht unterdrückt.

Beispielsweise kann der Prozessor 203 ausgebildet sein, die vorbestimmte Polarisationsebene 301 so einzustellen, dass sie einer in dem Störlicht 102 mit minimaler Häufigkeit auftretenden Polarisationsebene entspricht. Das Störlicht 102 kann beispielsweise mit der Bildaufnahmeeinrichtung 105 oder einer anderen Einrichtung gemessen werden. Der Prozessor 203 analysiert diese Messung und bestimmt daraus die Häufigkeiten, mit denen bestimmte Lichtpolarisationsebenen in dem Störlicht 102 auftreten.

Wenn das Störlicht 102 Umgebungslicht ist, so ist es Licht, das Licht verschiedenster Lichtpolarisationsebenen in sich vereint. Allerdings treten diese Polarisationsebenen nicht notwendigerweise gleichverteilt in dem Störlicht auf. Es kann sein, dass bestimmte Polarisationsebenen häufiger vorkommen als andere. Solche Polarisationsebenen, die weniger häufiger auftreten, eignen sich in besonderem Masse dazu, für die Übertragung von Nutzlicht genutzt zu werden, da hier die Anforderungen an die Störlichtunterdrückung nicht so hoch sein müssen wie bei häufiger auftretenden Polarisationsebenen.

Der Prozessor 203 kann ferner ausgebildet sein, eine Abschwächung des Beleuchtungslichts 104 aufgrund der Polarisation des Beleuchtungslichts 104 mittels einer entsprechenden Verstärkung in der Beleuchtungseinrichtung 103 auszugleichen. Durch die Polarisation des Lichts werden Schwingungsebenen unterdrückt, die nicht in der Lichtpolarisationsebene liegen. Damit einhergehend reduziert sich die Intensität des Lichts. Mit einem Verstärker in der Beleuchtungseinrichtung 103 kann diesem Effekt entgegengewirkt werden. Bei geeigneter Einstellung der Verstärkung kommt es zu keiner Blendung der aufzunehmenden Person 101.

Die Beleuchtungseinrichtung 103 kann auch einen Sensor umfassen, um das Störlicht 102 zu messen, sowie einen Prozessor, der daraus die Polarisationsebene mit der am geringsten vorkommenden Häufigkeit bestimmt und entsprechend den Verstärker der Beleuchtungseinrichtung 103 einstellt.

Fig. 3 zeigt ein schematisches Diagramm von Licht 104, das in einer ersten Polarisationsebene 301 polarisiert ist und von Licht 304, das in einer zweiten Polarisationsebene 302 polarisiert ist, gemäß einem Beispiel.

Auf der linken Seite der Figur 3 ist Licht 104 als eine Welle dargestellt, die in einer ersten Polarisationsebene 301 polarisiert ist. Diese erste Polarisationsebene kann beispielsweise der vorgegebenen Lichtpolarisationsebene entsprechen, wie in den Figuren 1 und 2 beschrieben. Das Licht kann eine Gitterstruktur 201 ungehindert passieren, deren Gitterstäbe entlang der ersten Polarisationsebene 301 ausgerichtet sind, wie zum Beispiel bei dem Polarisations-Sendefilter 201 der Beleuchtungseinrichtung 103 oder auch bei dem Polarisations-Empfangsfilter 202 der Bildaufnahmeeinrichtung 105, wie oben zu den Figuren 1 und 2 beschrieben.

Hingegen kann Licht 304, das in einer zweiten Polarisationsebene 302 polarisiert ist, welche orthogonal zu der ersten Polarisationsebene 301 verläuft, eine solche Gitterstruktur 201, 202 nicht passieren, da die Welle durch die Gitterstäbe unterdrückt wird, wie in Figur 3 ersichtlich ist. Auch Licht, das in anderen Polarisationsebenen polarisiert ist, welche unterschiedlich zu der ersten Polarisationsebene 301 verlaufen, kann eine solche Gitterstruktur 201, 202 nicht passieren.

Als resultierendes Beleuchtungslicht entsteht somit das Beleuchtungslicht 104, welches in der ersten bzw. vorgegebenen Lichtpolarisationsebene polarisiert ist, wie in den Figuren 1 und 2 dargestellt.

Das Polarisationsfilterelement 107 wirkt dagegen anders. Es unterdrückt gerade das Licht 104 in der ersten bzw. vorgegebenen Lichtpolarisationsebene 301. Die Gitterstruktur des Polarisationsfilterelements 107 kann beispielsweise um 90 Grad gedreht angeordnet sein gegenüber den beiden Gitterstrukturen von Polarisations-Sendefilter 201 und Polarisations-Empfangsfilter 202.

Außerdem braucht die Gitterstruktur des Polarisationsfilterelements 107 nicht nur Licht einer bestimmten Polarisationsebene durchlassen, wie beispielsweise das rechts in Figur 3 dargestellte Licht 304, sondern sie kann auch Licht in Polarisationsebenen durchlassen, welche zwischen den in Figur 3 dargestellten 90 Grad und beispielsweise bis zu 30 Grad gegenüber der ersten Polarisationsebene 301 ausgerichtet sind. Die Gitterstruktur des Polarisationsfilterelements 107 unterdrückt somit Licht in der ersten Polarisationsebene 301, lässt aber Licht durch oder zumindest teilweise durch, welches in anderen Polarisationsebenen als der ersten Polarisationsebene 301 polarisiert ist.

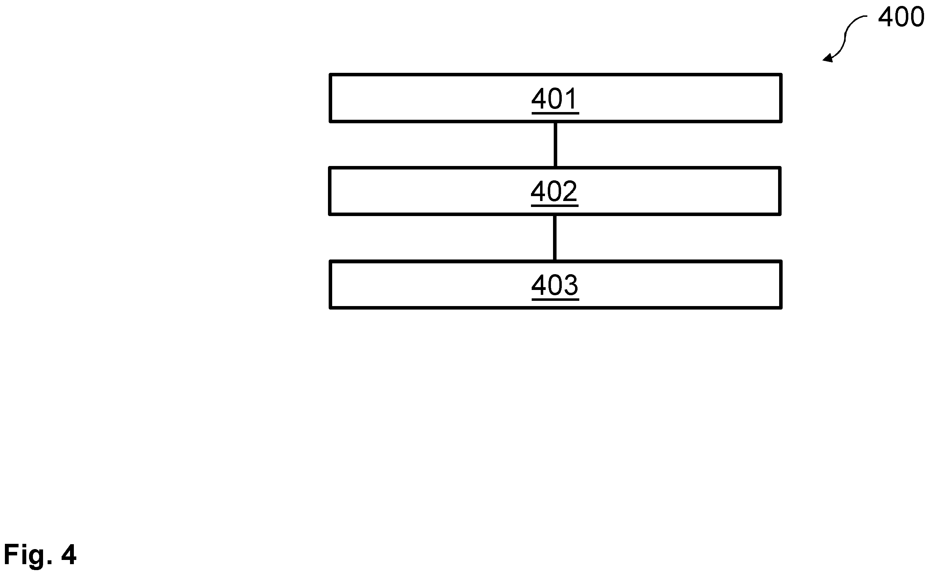

Fig. 4 zeigt ein schematisches Diagramm eines Verfahrens 400 zur Aufnahme eines Bildes einer Person für die Personenerkennung in einer Umgebung mit Störlicht gemäß einem Beispiel.

Das Verfahren 400 umfasst ein Aussenden 401 von polarisiertem Beleuchtungslicht in einer vorbestimmten Lichtpolarisationsebene durch eine Beleuchtungseinrichtung, z.B. einer Beleuchtungseinrichtung 103 wie oben zu den Figuren 1 und 2 beschrieben.

Das Verfahren 400 umfasst ein Empfangen 402 von Licht in der vorbestimmten Lichtpolarisationsebene durch eine Bildaufnahmeeinrichtung, z.B. einer Bildaufnahmeeinrichtung 105 wie oben zu den Figuren 1 und 2 beschrieben, um eine Bildaufnahme der Person zu erhalten.

Das Verfahren 400 umfasst ferner ein Unterdrücken 403 des Störlichts in der vorbestimmten Polarisationsebene durch ein Polarisationsfilterelement, z.B. ein Polarisationsfilterelement 107 wie oben zu den Figuren 1 und 2 beschrieben, das von der Beleuchtungseinrichtung und von der Bildaufnahmeeinrichtung beabstandet angeordnet ist.

Das Verfahren 400 kann mittels eines Computerprogramms mit einem Programmcode implementiert werden. Die Bildaufnahmeeinrichtung und/oder die Beleuchtungseinrichtung kann programmtechnisch eingerichtet sein, um den Programmcode auszuführen.

Alle in Verbindung mit einzelnen Ausführungsformen gezeigten oder beschriebenen Merkmale können in beliebiger Kombination in dem beschreibungsgemäßen Gegenstand vorgesehen sein, um gleichzeitig deren vorteilhafte Wirkungen zu realisieren.

### BEZUGSZEICHENLISTE

- 100: Bildaufnahmesystem
- 101: Person bzw. biometrisches Subjekt
- 102: Störlicht, Umgebungslicht
- 103: Beleuchtungseinrichtung
- 104: polarisiertes Beleuchtungslicht in einer vorbestimmten Lichtpolarisationsebene
- 105: Bildaufnahmeeinrichtung
- 106: von der Bildaufnahmeeinrichtung empfangenes Licht
- 107: Polarisationsfilterelement
- 108: unterdrücktes Störlicht

- 200: Bildaufnahmesystem
- 201: Polarisations-Sendefilter
- 202: Polarisations-Empfangsfilter
- 203: Prozessor

- 301: vorbestimmte bzw. erste Lichtpolarisationsebene
- 302: zweite Lichtpolarisationsebene
- 304: Licht in der zweiten Lichtpolarisationsebene

- 400: Verfahren zur Bildaufnahme zur Personenerkennung
- 401: Schritt 1: Aussenden von polarisiertem Beleuchtungslicht in einer vorbestimmten Lichtpolarisationsebene
- 402: Schritt 2: Empfangen von Licht in der vorbestimmten Lichtpolarisationsebene
- 403: Schritt 3: Unterdrücken des Störlichts in der vorbestimmten Lichtpolarisationsebene

## Patentansprüche

1. Bildaufnahmesystem (100, 200) zur Aufnahme eines Bildes einer Person (101) für die Personenerkennung in einer Umgebung mit Störlicht (102), mit:
einer Beleuchtungseinrichtung (103), welche ausgebildet ist, polarisiertes Beleuchtungslicht (104) in einer vorbestimmten Lichtpolarisationsebene (301) auszusenden;
einer Bildaufnahmeeinrichtung (105), welche ausgebildet ist, Licht (106) in der vorbestimmten Lichtpolarisationsebene (301) zu empfangen, um eine Bildaufnahme der Person (101) zu erhalten; und
einem Polarisationsfilterelement (107), das von der Beleuchtungseinrichtung (103) und von der Bildaufnahmeeinrichtung (105) beabstandet angeordnet und vorgesehen ist, das Störlicht (102) in der vorbestimmten Polarisationsebene (301) zu unterdrücken.

2. Bildaufnahmesystem (100, 200) nach Anspruch 1,
wobei die Beleuchtungseinrichtung (103) ein Polarisations-Sendefilter (201) umfasst, das ausgebildet ist, nur polarisiertes Beleuchtungslicht (104) in der vorbestimmten Lichtpolarisationsebene (301) durchzulassen.

3. Bildaufnahmesystem (100, 200) nach Anspruch 1 oder 2,
wobei die Bildaufnahmeeinrichtung (105) ein Polarisations-Empfangsfilter (202) umfasst, das ausgebildet ist, nur polarisiertes Beleuchtungslicht (104) in der vorbestimmten Lichtpolarisationsebene (301) durchzulassen.

4. Bildaufnahmesystem (100, 200) nach einem der vorstehenden Ansprüche,
wobei das Polarisationsfilterelement (107) ausgebildet ist, das Störlicht (102) in einer zweiten Polarisationsebene (302) durchzulassen, welche orthogonal zu der vorbestimmten Polarisationsebene (301) ist.

5. Bildaufnahmesystem (100, 200) nach Anspruch 4,
wobei das Polarisationsfilterelement (107) ausgebildet ist, das Störlicht (102) ferner in weiteren Polarisationsebenen durchzulassen, deren Winkel zu der vorbestimmten Polarisationsebene (301) oberhalb eines Schwellwerts liegen.

6. Bildaufnahmesystem (100, 200) nach einem der vorstehenden Ansprüche,
wobei das Polarisationsfilterelement (107) als Flächenelement ausgebildet ist.

7. Bildaufnahmesystem (100, 200) nach einem der vorstehenden Ansprüche,
wobei das Polarisationsfilterelement (107) auf einer transparenten Trennwand oder Türe oder einer transparenten Abschirmung oder einem Fenster aufgebracht ist, welches zwischen dem Störlicht (102) und der Person (101) angeordnet ist.

8. Bildaufnahmesystem (100, 200) nach einem der vorstehenden Ansprüche,
wobei das Polarisationsfilterelement (107) auf einer Innenraumbeleuchtung aufgebracht ist.

9. Bildaufnahmesystem (100, 200) nach einem der vorstehenden Ansprüche,
wobei das Polarisationsfilterelement (107) als eine Flüssigkristall-Gitterstruktur ausgebildet ist.

10. Bildaufnahmesystem (100, 200) nach einem der vorstehenden Ansprüche, mit:
einem Prozessor (203), welcher ausgebildet ist, die Bildaufnahme mit einer Referenzaufnahme zu vergleichen, um die Person (101) zu erkennen.

11. Bildaufnahmesystem (100, 200) nach Anspruch 10,
wobei die Referenzaufnahme auf einer Aufnahme mit Licht in der vorbestimmten Lichtpolarisationsebene (301) basiert.

12. Bildaufnahmesystem (100, 200) nach Anspruch 10 oder 11,
wobei der Prozessor (203) ausgebildet ist, die Beleuchtungseinrichtung (103) und/oder das Polarisationsfilterelement (107) basierend auf einer Erfassung des Störlichts (102) einzustellen.

13. Bildaufnahmesystem (100, 200) nach einem der Ansprüche 10 bis 12,
wobei der Prozessor (203) ausgebildet ist, die vorbestimmte Polarisationsebene (301) so einzustellen, dass sie einer in dem Störlicht (102) mit minimaler Häufigkeit auftretenden Polarisationsebene entspricht.

14. Bildaufnahmesystem (100, 200) nach einem der Ansprüche 10 bis 13,
wobei der Prozessor (203) ausgebildet ist, eine Abschwächung des Beleuchtungslichts (104) aufgrund der Polarisation des Beleuchtungslichts (104) mittels einer entsprechenden Verstärkung in der Beleuchtungseinrichtung (103) auszugleichen.

15. Verfahren (400) zur Aufnahme eines Bildes einer Person für die Personenerkennung in einer Umgebung mit Störlicht, wobei das Verfahren folgendes umfasst:
Aussenden (401) von polarisiertem Beleuchtungslicht in einer vorbestimmten Lichtpolarisationsebene durch eine Beleuchtungseinrichtung;
Empfangen (402) von Licht in der vorbestimmten Lichtpolarisationsebene durch eine Bildaufnahmeeinrichtung, um eine Bildaufnahme der Person zu erhalten; und
Unterdrücken (403) des Störlichts in der vorbestimmten Polarisationsebene durch ein Polarisationsfilterelement, das von der Beleuchtungseinrichtung und von der Bildaufnahmeeinrichtung beabstandet angeordnet ist.
